# EUROPÄISCHE PATENTSCHRIFT

(11) **EP 2 354 770 B1**
(45) Veröffentlichungstag und Bekanntmachung des Hinweises auf die Patenterteilung: **30.03.2016**
(21) Anmeldenummer: 11000445.4
(22) Anmeldetag: 20.01.2011
(51) Int. Cl.: G01F 23/22, G01K 1/08, G01L 19/14

(54) **Messsonde**
Measuring probe
Sonde de mesure

(30) Priorität: 03.02.2010 DE 102010006740
(43) Veröffentlichungstag der Anmeldung: 10.08.2011
(73) Patentinhaber: IGEMA GmbH, 48155 Münster (DE)
(72) Erfinder: Wittebrock, Klaus, 52080 Aachen (DE)
(74) Vertreter: Schiffer, Axel Martin

(56) Entgegenhaltungen:
- EP-A1- 0 943 902
- EP-A2- 0 246 435
- DE-A1-102004 010 912
- DE-U1- 29 522 433

## Beschreibung

Die Erfindung betrifft eine Messsonde zur Bestimmung von physikalischen Parametern, insbesondere Druck, Temperatur und/oder Füllstand einer Flüssigkeit, an oder in einem Behälter gemäß dem Oberbegriff des Anspruchs 1.

Die Messsonde weist eine Befestigungseinrichtung zum Befestigen der Messsonde an dem Behälter, ein Gehäuserohr, welches außerhalb des Behälters positionierbar ist, eine Messeinrichtung zur Aufnahme von Messsignalen, die an oder in dem Behälter positionierbar ist, und eine Elektronik zum Verarbeiten der Messsignale, welche in dem Gehäuserohr angeordnet ist, auf.

Messsonden der oben genannten Art sind bekannt und werden an Behältern, insbesondere an Kesseln, beispielsweise für Überwachungs-, Regelungs- und/oder Sicherungsaufgaben eingesetzt. In den Behältern können Fluide, also Flüssigkeiten und/oder Gase, bei hohem Druck und/oder bei hoher Temperatur aufgenommen sein.

Die Elektronik dient der Verarbeitung der von der Messeinrichtung bereitgestellten Signale. Damit die Elektronik einwandfrei arbeiten kann, muss diese von den hohen Temperaturen des Behälters beziehungsweise Kessels ferngehalten werden.

Dies kann einerseits dadurch erreicht werden, dass die Elektronik hinreichend weit von dem Behälter entfernt positioniert wird. Andererseits ist man aber bestrebt, den Aufbau der Messsonde möglichst kompakt und die Verbindungskabel kurz zu halten. Es ist daher vorgeschlagen worden, die Elektronik in dem Gehäuserohr der Messsonde anzuordnen. Eine solche Messsonde mit einer in dem Gehäuserohr aufgenommenen Elektronik ist aus der DE 10 2004 010 912 B4 bekannt. Zur Isolierung zwischen dem Kessel und der Elektronik ist das Gehäuserohr mit einem Verguss und einer Sperrscheibe aus einem temperaturbeständigen Kunststoff versehen.

EP 0 246 435 A2 offenbart eine Vorrichtung zum Messen der Temperatur mit einem Widerstands-Oberflächenmessfühler und einem den Widerstandswert verarbeitenden Verstärker. Der Messfühler ist im vorderen Ende eines Rohres beziehungsweise einer Hülse befestigt, und das Rohr ist auf der zu messenden Oberfläche befestigbar, insbesondere anschweißbar. Das der Oberfläche abgewandte Rohrende trägt ein Gehäuse zum elektrischen Anschluss. Der Verstärker ist im Gehäuse befestigt.

Der Erfindung liegt die Aufgabe zugrunde, eine Messsonde anzugeben, welche bei einem möglichst kompakten Aufbau eine gute Wartungsfreundlichkeit aufweist.

Die Aufgabe wird durch eine Messsonde mit den Merkmalen des Anspruchs 1 gelöst. Bevorzugte Ausgestaltungen sind in den abhängigen Ansprüchen angegeben.

Bei der erfindungsgemäßen Messsonde ist vorgesehen, dass das Gehäuserohr zur Wärmeisolierung mindestens in ein Stützrohr und ein Mantelrohr unterteilt ist, welche voneinander beabstandet sind, dass das Stützrohr mit der Befestigungseinrichtung verbunden ist, dass an einem behälterseitigen Endbereich des Mantelrohrs ein erstes Flanschelement angebracht ist, dass das Stützrohr mit dem ersten Flanschelement lösbar verbunden ist, und dass zwischen dem Stützrohr und dem ersten Flanschelement zur Wärmeisolierung mindestens ein erstes Isolierelement angeordnet ist.

Ein erster Grundgedanke der Erfindung besteht darin, das Gehäuserohr mehrteilig, also mindestens zweiteilig, auszubilden. Hierzu sind mindestens zwei Gehäuserohrteile, nämlich ein Stützrohr und ein Mantelrohr vorgesehen, die voneinander beabstandet angeordnet sind. Vorzugsweise ist zwischen dem Stützrohr und dem Mantelrohr ein Isolationsbereich vorgesehen, welcher beispielsweise durch einen Luftspalt und/oder andere Isoliermedien gebildet sein kann. Hierdurch wird der Wärmefluss vom Stützrohr zum Mantelrohr wesentlich reduziert und so der Wärmefluss über das Gehäuserohr insgesamt vermindert. Die Messsonde weist hierdurch eine effektive Wärmeisolierung auf, die die Elektronik in dem Gehäuserohr schützt.

Zweckmäßigerweise ist die Elektronik in demjenigen Gehäuserohrteil aufgenommen, welches durch das Mantelrohr gebildet wird. Das Mantelrohr befindet sich an einem dem Behälter abgewandten axialen Ende der Messsonde, während das Stützrohr an einem dem Behälter zugewandten axialen Ende der Messsonde angeordnet ist. Das Stützrohr ist, vorzugsweise lösbar, mit der Befestigungseinrichtung verbunden.

Ein zweiter Grundgedanke der Erfindung kann darin gesehen werden, die einzelnen Gehäuserohrteile, also insbesondere Stützrohr und Mantelrohr, nicht fest, wie zum Beispiel durch Verschweißen, Verpressen oder Verkleben, sondern lösbar, beispielsweise durch eine Schraub- oder Steckverbindung, miteinander zu verbinden. Besonders bevorzugt ist es, wenn das Stützrohr mit einem Handwerkzeug von dem ersten Flanschelement lösbar ist. Unter einer lösbaren Verbindung ist also insbesondere eine solche Verbindung zu verstehen, die mit einem Handwerkzeug, beispielsweise einem Schraubendreher, oder auch von Hand lösbar ist, nicht hingegen beispielsweise eine Schweißverbindung.

Das Gehäuserohr ist also mit einfachen handwerklichen Mitteln in seine Teile zerlegbar und erneut zusammenfügbar. Hierdurch wird eine verbesserte Zugänglichkeit der innerhalb des Gehäuserohrs angeordneten Komponenten, wie beispielsweise von Anschlüssen der Messeinrichtung, erreicht.

Die Lösbarkeit der Verbindung zwischen Stützrohr und Mantelrohr bietet außerdem die Möglichkeit, diese Teile gezielt auszutauschen und an die konkreten Einsatzbedingungen anzupassen. So ist es beispielsweise möglich, bei erhöhten Temperaturen ein vorhandenes Stützrohr gegen ein längeres Stützrohr auszutauschen, um einen größeren Abstand des Mantelrohrs und der darin aufgenommenen Elektronik von dem Behälter zu erreichen. In diesem Zusammenhang ist es insbesondere vorteilhaft, dass das Stützrohr mit der Befestigungseinrichtung ebenfalls lösbar verbunden, beispielweise verschraubt, ist.

Ein wesentlicher Vorteil der Erfindung besteht somit darin, dass die Messsonde bei guter Isolierung zwischen Behälter und Elektronik einen einfachen Zugang zu innerhalb des Gehäuserohrs angeordneten Komponenten ermöglicht und eine große Anpassungsfähigkeit an unterschiedliche Betriebsbedingungen aufweist.

Ein weiterer Grundgedanke der Erfindung besteht darin, das Mantelrohr zur Minimierung des Wärmeflusses möglichst dünnwandig auszubilden. Um trotz des dünnwandigen Mantelrohrs eine zuverlässige und mit einfachen Mitteln lösbare Verbindung mit dem Stützrohr zu ermöglichen, ist an dem behälterseitigen Endbereich des Mantelrohrs ein erstes Flanschelement angeordnet. Das erste Flanschelement ist vorzugsweise fest mit dem Mantelrohr verbunden, beispielsweise mit diesem verpresst oder verklebt. Das Stützrohr kann dann lösbar, beispielsweise über eine Schraubverbindung, mit dem ersten Flanschelement verbunden werden. Auf diese Weise wird ein möglichst einfaches Lösen des Stützrohrs von dem ersten Flanschelement erreicht.

Um einen Wärmefluss von dem Stützrohr zu dem ersten Flanschelement möglichst zu unterbinden, ist hierzwischen ein Isolationsbereich gebildet. Hierzu ist zwischen dem Stützrohr und dem ersten Flanschelement ein erstes Isolierelement angeordnet. Vorzugsweise ist das erste Isolierelement zwischen dem Stützrohr und dem ersten Flanschelement eingeklemmt und auf diese Weise ebenfalls mit einfachen Mitteln durch Lösen der Verbindung zwischen Stützrohr und erstem Flanschelement austauschbar. In einer bevorzugten Ausgestaltung ist das erste Isolierelement als ein Isolierring ausgebildet, welcher einen axialen Bereich des Stützrohrs umfangsseitig umgibt.

Zur weiteren Isolierung zwischen Stützrohr und Flanschelement ist es bevorzugt, dass zwischen dem Stützrohr und dem ersten Flanschelement ein Spalt gebildet ist. Dieser Spalt ist mit dem Umgebungsmedium der Messsonde, also üblicherweise Luft, gefüllt, welches ein gutes Isolationsmedium darstellt.

Vorzugsweise ist der Isolationsbereich derart gebildet, dass kein direkter Kontakt zwischen dem Stützrohr und dem ersten Flanschelement besteht. Stützrohr und erstes Flanschelement sind vielmehr ausschließlich über Isolationsmedien, insbesondere über das erste Isolierelement und den Luftspalt, miteinander verbunden. Durch den Isolationsbereich wird insbesondere ein Wärmefluss in radialer Richtung reduziert. Der Isolationsbereich erstreckt sich vorzugsweise ringförmig oder hülsenförmig zwischen dem Stützrohr und dem ersten Flanschelement.

Die Befestigung des Stützrohrs an dem ersten Flanschelement wird dadurch erreicht, dass das Stützrohr mit einem zweiten Flanschelement mit dem ersten Flanschelement verbunden ist. Hierunter ist insbesondere zu verstehen, dass das Stützrohr und das erste Flanschelement mittels des zweiten Flanschelements miteinander verbunden sind. Eine bevorzugte Ausgestaltung besteht darin, dass das Stützrohr zwischen dem ersten Flanschelement und dem zweiten Flanschelement eingespannt ist. Dies bietet den Vorteil, dass das Stützrohr selbst keine eigenen Befestigungselemente, wie beispielsweise eine Schraubverbindung, aufweisen muss. Die Verbindung des Stützrohrs mit dem ersten Flanschelement erfolgt über eine Verbindung des zweiten Flanschelements mit dem ersten Flanschelement, beispielsweise über eine Schraub-, Steck- oder Klemmverbindung. Das Stützrohr kann somit geometrisch einfach und vergleichsweise dünnwandig ausgebildet sein.

Nach der Erfindung ist vorgesehen, dass das Stützrohr einen radial nach außen vorstehenden Bund aufweist, welcher zwischen dem ersten Flanschelement und dem zweiten Flanschelement einspannbar ist. Auf diese Weise wird bei einfacher geometrischer Gestaltung des Stützrohrs eine zuverlässige und mit einfachen Mitteln lösbare Verbindung zwischen dem Stützrohr und dem ersten Flanschelement erreicht.

In einer bevorzugten Ausgestaltung ist das zweite Flanschelement mit dem ersten Flanschelement verschraubt. Hierzu können mehrere gleichmäßig über den Umfang der beiden Flanschelemente verteilte Schraubverbindungen vorgesehen sein. Zusätzlich oder alternativ ist es auch möglich, die Flanschelemente über Klemmelemente miteinander zu verspannen.

Zur Minimierung des Wärmeflusses zwischen Stützrohr und zweitem Flanschelement ist zwischen dem Stützrohr und dem zweiten Flanschelement mindestens ein weiterer Isolationsbereich vorgesehen. Insbesondere ist ein zweites Isolierelement und vorzugsweise mindestens ein Spalt, insbesondere ein Luftspalt, vorgesehen. Der Isolationsbereich dient insbesondere der Reduzierung eines Wärmeflusses in radialer Richtung und erstreckt sich vorzugsweise ringförmig oder hülsenförmig zwischen dem Stützrohr und dem zweiten Flanschelement.

Durch die entsprechenden Isolierbereiche ist das Stützrohr vorzugsweise von dem ersten und von dem zweiten Flanschelement räumlich getrennt oder beabstandet.

Eine feste und zuverlässige Verbindung des ersten Flanschelements mit dem Mantelrohr kann dadurch erreicht werden, dass das erste Flanschelement zumindest bereichsweise in das Mantelrohr eingepresst ist.

Vorzugsweise ist zur weiteren Wärmeisolierung in dem Mantelrohr ein drittes Isolierelement angeordnet, welches an einer inneren Umfangsfläche des Mantelrohrs anliegt und eine Durchtrittsöffnung zur Durchführung von Anschlusskabeln der Messeinrichtung aufweist. Durch das dritte Isolierelement, welches insbesondere kreisscheiben- oder ringscheibenförmig ausgebildet sein kann, wird ein Wärmefluss in axialer Richtung der Messsonde, insbesondere im Inneren des Mantelrohrs, weitgehend unterbunden oder reduziert. Zudem bewirkt das dritte Isolierelement durch das Anliegen an dem Mantelrohr auch eine Reduktion des Wärmeflusses über das Mantelrohr selbst, wobei aufgrund der Zweiteilung des Gehäuserohrs die Temperatur des Mantelrohrs bereits relativ niedrig und der Wärmefluss über das Mantelrohr entsprechend gering ist.

Eine weitere Reduzierung des Wärmeflusses über das Mantelrohr wird durch ein dünnwandiges Mantelrohr erreicht, welches vorzugsweise eine Wandstärke von weniger als 0,5 mm aufweist. Weiter ist es bevorzugt, dass das Mantelrohr aus einem Metall mit geringer thermischer Leitfähigkeit, beispielsweise Edelstahl, gebildet ist.

Ein zentraler Aspekt des dritten Isolierelements besteht in der zentralen Durchtrittsöffnung zur Durchführung von elektrischen Leitern, insbesondere Anschlusskabeln der Messeinrichtung. Dabei ist insbesondere vorgesehen, dass die Anschlusskabel in der Durchgangsbohrung weitgehend frei bewegbar sind, so dass diese gegebenenfalls ausgetauscht werden können. Dies bietet einen wesentlichen Vorteil gegenüber in einem Isolierelement vergossenen Anschlusskabeln, wie im Stand der Technik bekannt.

Vor dem Hintergrund unterschiedlicher Einsatzbedingungen der Messsonde ist es vorteilhaft, wenn das erste und/oder das zweite und/oder das dritte Isolierelement austauschbar angeordnet sind. Je nach Temperaturbereich, in dem die Messsonde eingesetzt wird, können die Isolierelemente somit gezielt, beispielsweise hinsichtlich ihres Materials, ausgetauscht und angepasst werden.

Insgesamt wird durch den modularen Aufbau der Messsonde eine große Anpassungsfähigkeit an sich ändernde Isolationsaufgaben ermöglicht. Außerdem sind die Komponenten der Messsonde besser zugänglich und einfacher austauschbar. Insbesondere im Vergleich zu einem fest eingebrachten Verguss und fest miteinander verbundenen Komponenten bietet die erfindungsgemäße Messsonde somit deutliche Wartungs- und Lagerungsvorteile.

Eine besonders wirkungsvolle Wärmeisolierung wird dadurch erreicht, dass das Mantelrohr eine geringere Wandstärke aufweist als das Stützrohr. Bei dem Stützrohr, welches vergleichsweise warm sein kann, ist die Unterbindung eines axialen Wärmeflusses weniger wirkungsvoll als bei dem Mantelrohr, welches eine geringere Temperatur aufweist und in welchem die Elektronik angeordnet ist. Mit dem vergleichsweise dickeren Stützrohr wird eine gute mechanische Stabilität der Messsonde, insbesondere in dem behälternahen Bereich, erreicht, während das Mantelrohr bei immer noch ausreichender Stabilität einen vergleichsweise geringen axialen Wärmefluss gewährleistet.

Vorzugsweise ist in dem Stützrohr eine Isolierhülse angeordnet. Durch die Isolierhülse wird im Wesentlichen ein Wärmefluss von der Messeinrichtung beziehungsweise von einem mit der Messeinrichtung verbundenen Anschlusselement in radialer Richtung vermindert.

Ein weiterer wirkungsvoller Schutz der Elektronik vor überhöhten Temperaturen kann dadurch erreicht werden, dass an einem dem behälterseitigen Endbereich gegenüberliegenden axialen Ende des Mantelrohres ein Deckel aus wärmeisolierendem Material zum Verschließen des Mantelrohrs angeordnet ist und dass ein Halter für die Elektronik, insbesondere eine Platine, an dem Deckel befestigt ist. An dem behälterabgewandten axialen Ende des Mantelrohrs, also dem der Messeinrichtung gegenüberliegenden Ende des Mantelrohrs, herrschen vergleichsweise niedrige Temperaturen, so dass eine Anschlagung des Halters an diesem Ende der Messsonde zu einer deutlichen Reduzierung der Wärmeleitung führt.

Die Erfindung wird nachfolgend anhand der beigefügten schematischen Zeichnungen weiter erläutert. Hierin zeigt:
- Fig. 1: eine Seitenansicht einer erfindungsgemäßen Messsonde,
- Fig. 2: eine Schnittansicht der Messsonde aus Fig. 1, und
- Fig. 3: eine vergrößerte Ansicht eines mittleren Bereichs aus Fig. 2.

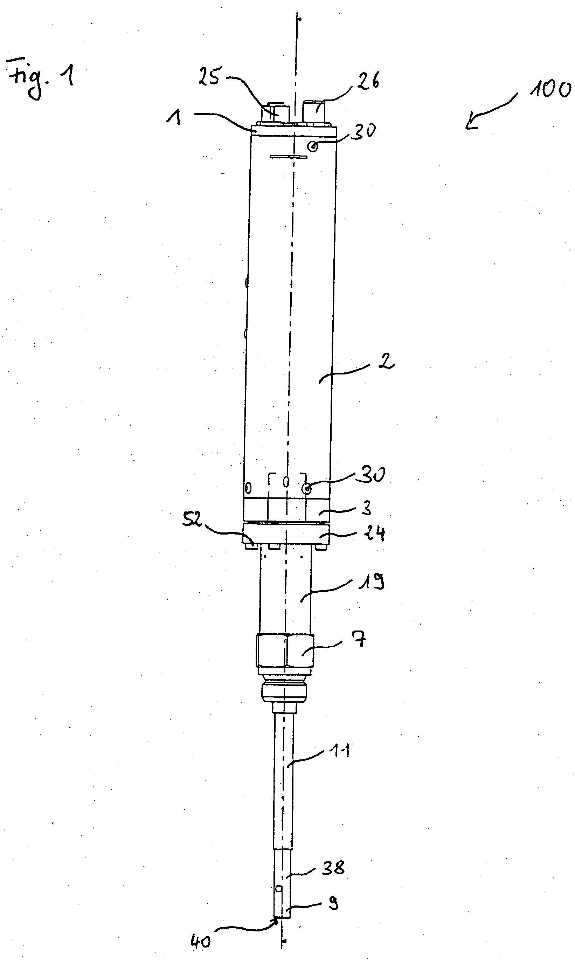

Unter Bezugnahme auf die Figuren 1 bis 3 wird nachstehend ein Ausführungsbeispiel einer erfindungsgemäßen Messsonde 100 beschrieben. In den Figuren werden für dieselben Komponenten jeweils dieselben Bezugzeichen verwendet.

Fig. 1 zeigt eine Außenansicht der Messsonde 100, aus welcher der grundlegende Aufbau ersichtlich ist. Die Messsonde 100 weist eine im Wesentlichen zylindrische Gestalt mit einem zweiteiligen Gehäuserohr und einer stabförmigen Messeinrichtung 9 auf. Bei der Messeinrichtung 9 handelt es sich im gezeigten Beispiel um eine selbstüberwachende Begrenzerelektrode.

Eine Befestigungseinrichtung 7 dient der Befestigung der Messsonde 100 an einem Behälter, beispielsweise einem Kessel. Die Befestigungseinrichtung 7 weist ein Gewinde auf, mit welchem die Messsonde 100 direkt in ein am Behälter vorgesehenes Gewinde eingeschraubt werden kann.

Das Gehäuserohr besteht aus mindestens zwei Gehäuserohrteilen, nämlich einem durchmesserkleineren Stützrohr 19 und einem durchmessergrößeren Mantelrohr 2. Das Stützrohr 19 ist auf die Befestigungseinrichtung 7 aufgeschraubt. Das der Befestigungseinrichtung 7 gegenüberliegende axiale Ende des Stützrohrs 19 ist über zwei Flanschelemente 3, 24 mit dem Mantelrohr 2 verbunden.

In dem Mantelrohr 2 sind Öffnungen 30 vorgesehen, die einen Gasaustausch mit der Umgebung ermöglichen. An dem der Messeinrichtung 9 abgewandten axialen Ende der Messsonde 100 ist das Mantelrohr 2 mit einem Deckel 1 abgeschlossen, an dem zur Verbindung mit externen Geräten mehrere Anschlussbuchsen 25, 26 vorgesehen sind.

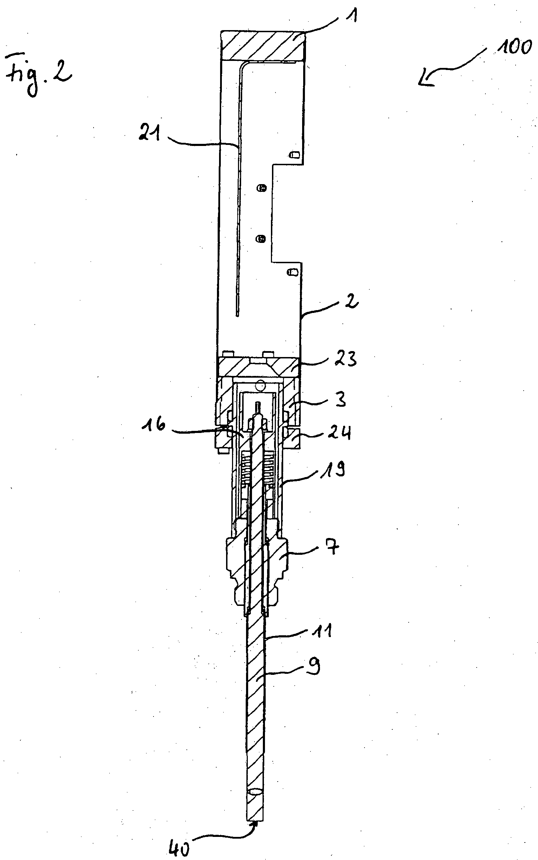

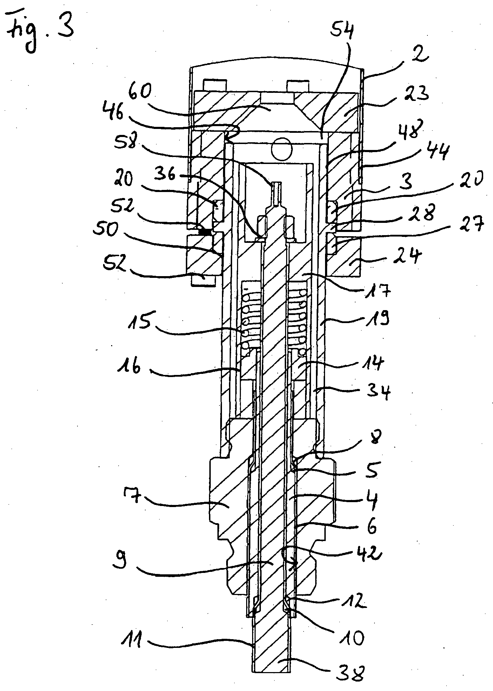

Figuren 2 und 3 zeigen eine Längsschnittansicht der Messsonde 100.

In der Befestigungseinrichtung 7 ist eine Durchgangsöffnung 42 ausgebildet, durch welche die Messeinrichtung 9 hindurchgeführt ist. Die Messeinrichtung 9 ist als selbstüberwachende Messeinrichtung ausgeführt und weist eine stabförmige Begrenzerelektrode 38 und eine konzentrisch zu der Begrenzerelektrode 38 angeordnete hülsenförmige Überwachungselektrode 4 auf.

Mit Hilfe der Begrenzerelektrode 38, die mit einer elektrischen Isolierung 11 versehen ist, kann über eine Leitfähigkeitsmessung ein Füllstand einer Flüssigkeit in dem Behälter abgefragt werden. Die konzentrisch zu der Begrenzerelektrode 38 angeordnete Überwachungselektrode 4 ist ebenfalls mit einer elektrischen Isolierung 6 versehen. Für den Fall, dass aus Ablagerungen auf der Begrenzerelektrode 38 und deren Isolierung 11 eine leitfähige Schicht gebildet wird, kann dies mit Hilfe der Überwachungselektrode 4 nachgewiesen werden, bevor sich eine leitende Verbindung zwischen der Begrenzerelektrode 38 und der Befestigungseinrichtung 7 beziehungsweise einer Behälterwand ergibt.

Die Begrenzerelektrode 38 weist in Richtung des behälterseitigen Elektrodenendes 40 eine Aufweitung ihres Durchmessers auf. Die Überwachungselektrode 4 weist eine hierzu axial versetzte Aufweitung ihres Innendurchmessers auf. Zwischen den Aufweitungen weist die Isolierung 11, welche im Wesentlichen hülsenförmig gestaltet ist, eine entsprechende Aufweitung auf. Im Bereich der Aufweitungen sind zwischen der Begrenzerelektrode 38 und der Überwachungselektrode 4 Dichtringe 10, 12 eingesetzt. Entsprechende Dichtringe 5, 8 sind an einem weiteren Aufweitungsbereich vorgesehen, in welchem die Befestigungseinrichtung 7 eine Aufweitung des Innendurchmessers und die Überwachungselektrode 4 eine Aufweitung des Außendurchmessers in Richtung des behälterseitigen Endbereichs der Messsonde 100 aufweist.

Innerhalb des Stützrohrs 19 und angrenzend an die Befestigungseinrichtung 7 ist ein Zentrierring 14 zur innenseitigen Aufnahme der Messeinrichtung 9, insbesondere der Begrenzerelektrode 38, und zur außenseitigen Aufnahme einer thermischen Isolierhülse 16 angeordnet. Die Isolierhülse 16 erstreckt sich konzentrisch zu der Messeinrichtung 9 beziehungsweise der Begrenzerelektrode 38 und ist innerhalb des Stützrohrs 19 angeordnet. Dabei ist zwischen Isolierhülse 16 und Stützrohr 19 ein zylinderförmiger Spalt 34 gebildet, so dass die Isolierhülse 16 das Stützrohr 19 nicht direkt kontaktiert. Die Isolierhülse 16 ist derart bemessen, dass sie sich in axialer Richtung zum Mantelrohr 2 hin weniger weit erstreckt als das Stützrohr 19.

Die Isolierhülse 16 hat eine zylinder- oder rohrförmige Gestalt und erstreckt sich über einen wesentlichen Bereich der Länge des Stützrohrs 19, zum Beispiel mindestens 60%, 70% oder 80%.

Weiterhin ist innerhalb der Isolierhülse 16 eine Druckfeder 15 vorgesehen, die sich einerseits an dem Zentrierring 14 und andererseits an einem nach innen gerichteten Stützabschnitt 17 der Isolierhülse 16, welcher einteilig mit der Isolierhülse 16 ausgebildet ist, abstützt. Mittels eines Anschlagelements 36, das an dem behälterabgewandten Ende der Begrenzerelektrode 38 auf diese aufgeschraubt ist, wird die Isolierhülse 16 gegen die Druckkraft der Druckfeder 15 abgestützt.

Zur Verbindung des Mantelrohrs 2 mit dem Stützrohr 19 ist an dem Mantelrohr 2 ein erstes Flanschelement 3 angebracht. Dieses weist außenumfangseitig einen Befestigungsbereich 44 zur Befestigung mit dem Mantelrohr 2 auf. Hierbei ist vorgesehen, dass die Verbindung zwischen Mantelrohr 2 und erstem Flanschelement 3 als im Wesentlichen dauerhafte, nicht mit Handwerkzeugen lösbare Verbindung ausgestaltet ist. Vorzugsweise ist das erste Flanschelement 3 in das Mantelrohr 2 eingepresst oder mit diesem verklebt oder verschweißt.

Das erste Flanschelement 3 ist hülsenförmig gestaltet und mit einer mittigen Öffnung 46 zur Aufnahme des Stützrohrs 19 versehen. Die Öffnung 46 weist einen Durchmesser auf, welcher geringfügig größer ist als der Außendurchmesser des Stützrohrs 19. Durch den geringfügig größeren Innendurchmesser des ersten Flanschelements 3 ist zwischen dem Stützrohr 19 und dem ersten Flanschelement 3 ein ringförmiger Spalt 48 gebildet, welcher als Isolierung, insbesondere in radialer Richtung, zwischen diesen beiden Teilen dient.

Das Stützrohr 19 ist also innerhalb des ersten Flanschelements 3 aufgenommen, während das Mantelrohr 2 am Außenumfang des Flanschelements 3 befestigt ist. In der dargestellten Ausführungsform überlappen sich das durchmessergrößere Mantelrohr 2 und das durchmesserkleinere Stützrohr 19 axial, wodurch eine verbesserte Stabilität der Messsonde 100 erreicht wird.

An das erste Flanschelement 3 ist ein zweites Flanschelement 24 mit Befestigungsmitteln, welche vorliegend als Schrauben 52 ausgebildet sind, angeschraubt. Das Stützrohr 19 ist in dem zweiten Flanschelement 24 aufgenommen. Zwischen dem Stützrohr 19 und dem zweiten Flanschelement 24 ist ebenfalls ein ringförmiger Isolationsbereich mit einem ringförmigen Spalt 50 zur Wärmeisolierung, insbesondere in radialer Richtung, gebildet. Das zweite Flanschelement 24 ist ringförmig gestaltet und weist im Wesentlichen den gleichen Innendurchmesser auf wie das erste Flanschelement 3, so dass auch zwischen dem zweiten Flanschelement 24 und dem Stützrohr 19 ein ringförmiger Spalt 50 gebildet ist. Das Stützrohr 10 ist durch das zweite Flanschelement 24 hindurchgeführt und ragt endseitig in das erste Flanschelement 3 hinein.

Das erste und zweite Flanschelement 3, 24 weisen jeweils an dem dem anderen Flanschelement zugewandten axialen Ende einen Bereich mit einem vergrößerten Innendurchmesser auf, so dass ein ringförmiger Aufnahmeraum zwischen den Flanschelementen 3, 24 und dem Stützrohr 19 gebildet ist.

Das Stützrohr 19 weist einen Bund 28 auf, welcher in den ringförmigen Aufnahmeraum hineinragt und zwischen dem ersten und dem zweiten Flanschelement 3, 24 eingeklemmt ist. Weiterhin sind in dem Aufnahmeraum zwei jeweils als Isolierring ausgebildete thermische Isolierelemente 20, 27 angeordnet, wobei ein erstes Isolierelement 20 das Stützrohr 19 und das erste Flanschelement 3 und ein zweites Isolierelement 27 das Stützrohr 19 und das zweite Flanschelement 24 kontaktiert. Die Isolierelemente 20, 27 sind beidseitig des Bundes 28 angeordnet.

An dem der Messeinrichtung 9 abgewandten Ende des ersten Flanschelements 3 ist ein drittes thermisches Isolierelement 23 innerhalb des Mantelrohrs 2 vorgesehen. Dieses ist derart dimensioniert und eingesetzt, dass es eine innere Umfangsfläche des Mantelrohrs 2 und eine axiale Stirnfläche des ersten Flanschelements 3 kontaktiert. Das Stützrohr 19 ist hingegen derart bemessen und angeordnet, dass es das dritte Isolierelement 23 nicht kontaktiert und zwischen Stützrohr 19 und drittem Isolierelement 23 ein isolierender Freiraum 54 ausgebildet ist. Das dritte Isolierelement 23 weist eine mittige Durchtrittsöffnung 60 zur Durchführung von elektrischen Leitern, insbesondere Anschlusskabeln der Messeinrichtung 9, auf. Die Anschlusskabel können mit einem Anschluss 58 der Begrenzerelektrode 38 verbunden sein.

Das dritte Isolierelement 23 ist vorzugsweise scheiben- oder zylinderförmig gestaltet und erstreckt sich vorzugsweise über einen wesentlichen Bereich des Querschnitts des Mantelrohrs 2, zum Beispiel mindestens 80%, 90% oder 95% der Querschnittsfläche des Mantelrohrs 2. Durch das dritte Isolierelement 23 wird das Mantelrohr in der Art eines Stopfens oder Pfropfens, in welchem eine Durchführung für Anschlusskabel vorgesehen ist, weitgehend verschlossen.

Der Deckel 1 ist an dem der Messeinrichtung 9 abgewandten Ende der Messsonde 100 vorgesehen und verschließt das Mantelrohr 2. Der Deckel 1 ist aus einem thermisch isolierenden Material gebildet. An dem Deckel 1 ist ein Halter 21 für die Elektronik angebracht. Der Halter 21 ist innerhalb des Mantelrohrs 2 angeordnet und erstreckt sich ausgehend von dem Deckel 1 in Richtung des Stützrohrs 19 beziehungsweise der Befestigungseinrichtung 7. Der Halter 21 kann insbesondere eine Leiterplatine sein oder zur Halterung einer Leiterplatine ausgebildet sein.

Als Werkstoffe für die thermisch isolierenden Komponenten, also insbesondere die als Isolierringe ausgebildeten ersten und zweiten Isolierelemente 20, 27, das dritte Isolierelement 23 sowie die Isolierbuchse 16 beziehungsweise -hülse sind insbesondere die Werkstoffe Polytetrafluorethylen (PTFE) oder Keramik vorgesehen. Auch die Dichtringe 5, 8, 10 und 12 bestehen vorzugsweise aus PTFE oder Keramik. Dabei wird PTFE insbesondere für einen Temperaturbereich von bis zu 240°C und Keramik für einen Temperaturbereich von bis zu 360°C eingesetzt. Das Stützrohr 19 und das Mantelrohr 2 sind vorzugsweise aus Edelstahl gefertigt.

Insgesamt werden mit der erfindungsgemäßen Messsonde im Hinblick auf die Wärmeisolierung hervorragende Eigenschaften bei gleichzeitig sehr kompaktem und variablem Aufbau erzielt. Durch die Zweiteilung des Gehäuses und die miteinander lösbar verbundenen Gehäuseteile wird eine sehr gute Zugänglichkeit der Messsonde 100 und Austauschbarkeit der darin enthaltenen Komponenten gewährleistet. Die Messsonde 100 ist damit flexibel an unterschiedliche Einsatzbedingungen anpassbar und besonders wartungsfreundlich.

## Patentansprüche

1. Messsonde zur Bestimmung von physikalischen Parametern, insbesondere Druck, Temperatur und/oder Füllstand einer Flüssigkeit, an oder in einem Behälter,
- mit einer Befestigungseinrichtung (7) zum Befestigen der Messsonde an dem Behälter,
- mit einem Gehäuserohr, welches außerhalb des Behälters positionierbar ist,
- mit einer Messeinrichtung (9) zur Aufnahme von Messsignalen, die an oder in dem Behälter positionierbar ist, und
- mit einer Elektronik zum Verarbeiten der Messsignale, welche in dem Gehäuserohr angeordnet ist,
**dadurch gekennzeichnet,**
- **dass** das Gehäuserohr zur Wärmeisolierung mindestens in ein Stützrohr (19) und ein Mantelrohr (2) unterteilt ist, welche voneinander beabstandet sind,
- **dass** das Stützrohr (19) lösbar mit der Befestigungseinrichtung (7) verbunden ist,
- **dass** an einem behälterseitigen Endbereich des Mantelrohrs (2) ein erstes Flanschelement (3) angebracht ist,
- **dass** das erste Flanschelement (3) hülsenförmig gestaltet und das Stützrohr (19) innerhalb des ersten Flanschelements (3) aufgenommen ist,
- **dass** das Stützrohr (19) zur lösbaren Verbindung mit dem ersten Flanschelement (3) einen radial nach außen vorstehenden Bund (28) aufweist, welcher zwischen dem ersten Flanschelement (3) und einem zweiten, ringförmigen Flanschelement (24), das mit Befestigungsmitteln mit dem ersten Flanschelement (3) verbunden ist, eingespannt ist und
- **dass** zur Wärmeisolierung zwischen dem Stützrohr (19) und dem ersten Flanschelement (3) sowie dem Stützrohr (19) und dem zweiten Flanschelement (24) beidseitig des Bundes (28) ringförmige Isolierelemente (20, 27) angeordnet sind.

2. Messsonde nach Anspruch 1,
**dadurch gekennzeichnet,**
**dass** das Stützrohr (19) mit einem Handwerkzeug von dem ersten Flanschelement (3) lösbar ist.

3. Messsonde nach Anspruch 1 oder 2,
**dadurch gekennzeichnet,**
**dass** zwischen dem Stützrohr (19) und dem ersten Flanschelement (3) zur weiteren Wärmeisolierung ein Spalt gebildet ist.

4. Messsonde nach einem der Ansprüche 1 bis 3,
**dadurch gekennzeichnet,**
**dass** das zweite Flanschelement (24) mit dem ersten Flanschelement (3) verschraubt ist.

5. Messsonde nach einem der Ansprüche 1 bis 4,
**dadurch gekennzeichnet,**
**dass** zwischen dem Stützrohr (19) und dem zweiten Flanschelement (24) mindestens ein Spalt vorgesehen ist.

6. Messsonde nach einem der Ansprüche 1 bis 5,
**dadurch gekennzeichnet,**
**dass** das erste Flanschelement (3) zumindest bereichsweise in das Mantelrohr (2) eingepresst ist.

7. Messsonde nach einem der Ansprüche 1 bis 6,
**dadurch gekennzeichnet,**
**dass** in dem Mantelrohr (2) zur weiteren Wärmeisolierung ein drittes Isolierelement (23) angeordnet ist, welches an einer inneren Umfangsfläche des Mantelrohrs (2) anliegt und eine Durchtrittsöffnung (60) zur Durchführung von Anschlusskabeln der Messeinrichtung (9) aufweist.

8. Messsonde nach einem der Ansprüche 1 bis 7,
**dadurch gekennzeichnet,**
**dass** das Mantelrohr (2) eine geringere Wandstärke aufweist als das Stützrohr (19).

9. Messsonde nach einem der Ansprüche 1 bis 8,
**dadurch gekennzeichnet,**
**dass** in dem Stützrohr (19) eine Isolierhülse (16) angeordnet ist.

10. Messsonde nach einem der Ansprüche 1 bis 9,
**dadurch gekennzeichnet,**
**dass** an einem dem behälterseitigen Endbereich gegenüberliegenden axialen Ende des Mantelrohrs (2) ein Deckel (1) aus wärmeisolierendem Material zum Verschließen des Mantelrohrs (2) angeordnet ist und
**dass** ein Halter (21) für die Elektronik, insbesondere eine Platine, an dem Deckel (1) befestigt ist.

## Claims

1. Measuring probe for determining physical parameters, in particular pressure, temperature and / or fill level of a liquid, on or in a container, having
- a fixing means (7) to fix the measuring probe to the container,
- a housing pipe which can be positioned outside of the container,
- a measuring device (9) to record measurement signals which can be positioned on or in the container, and
- an electronic unit for processing the measurement signals which is arranged in the housing pipe,
**characterised in that**
- the housing pipe is subdivided for heat insulation at least into a support pipe (19) and a jacket pipe (2), which are spaced apart from each other,
- the support pipe (19) is releasably connected to the fixing means (7),
- a first flange element (3) is arranged on a container-side end region of the jacket pipe (2),
- the first flange element (3) is designed as a sleeve and the support pipe (19) is received within the first flange element (3),
- the support pipe (19) has a radially outwardly protruding collar (28) for releasable connection to the first flange element (3), the collar (28) being tensioned between the first flange element (3) and a second, annular flange element (24) which is connected to the first flange element (3) with fixing means, and
- annular insulating elements (20, 27) are arranged for heat insulation between the support pipe (19) and the first flange element (3) and between the support pipe (19) and the second flange element (24) on both sides of the collar (28).

2. Measuring probe according to claim 1,
**characterised in that**
the support pipe (19) can be released from the first flange element (3) with a hand tool.

3. Measuring probe according to claim 1 or 2,
**characterised in that**
a gap is formed between the support pipe (19) and the first flange element (3) for further heat insulation.

4. Measuring probe according to one of claims 1 to 3,
**characterised in that**
the second flange element (24) is screwed to the first flange element (3).

5. Measuring probe according to one of claims 1 to 4,
**characterised in that**
at least one gap is provided between the support pipe (19) and the second flange element (24).

6. Measuring probe according to one of claims 1 to 5,
**characterised in that**
the first flange element (3) is pressed at least area-wise into the jacket pipe (2).

7. Measuring probe according to one of claims 1 to 6,
**characterised** inthat
a third insulating element (23) is arranged in the jacket pipe (2) for further heat insulation, the third insulating element (23) lying against an inner peripheral area of the jacket pipe (2) and having a passage opening (60) for passing through connection cables of the measuring device (9).

8. Measuring probe according to one of claims 1 to 7,
**characterised in that**
the jacket pipe (2) has a smaller wall thickness than the support pipe (19).

9. Measuring probe according to one of claims 1 to 8,
**characterised in that**
an insulating sleeve (16) is arranged in the support pipe (19).

10. Measuring probe according to one of claims 1 to 9,
**characterised in that**
a cover (1) made of heat insulating material is arranged at an axial end, lying opposite the container-side end region, of the jacket pipe (2) to close the jacket pipe (2) and
a holder (21) for the electronic unit, in particular a circuit board, is fixed to the cover (1).

## Revendications

1. Sonde de mesure pour la détermination de paramètres physiques, en particulier de la pression, de la température et/ou du niveau d'un liquide, sur ou dans un récipient,
- avec un dispositif de fixation (7) pour la fixation de la sonde de mesure sur le récipient,
- avec un tube de logement, qui peut être positionné à l'extérieur du récipient,
- avec un dispositif de mesure (9) pour la réception de signaux de mesure, qui peut être positionné sur ou dans le récipient, et
- avec un système électronique pour le traitement des signaux de mesure, qui est disposé dans le tube de logement,
**caractérisée :**
- **en ce que**, pour l'isolation thermique, le tube de logement est subdivisé au moins en un tube de support (19) et un tube d'enveloppe (2), qui sont espacés l'un de l'autre,
- **en ce que** le tube de support (19) est relié de façon détachable au dispositif de fixation (7),
- **en ce qu'**un premier élément formant un rebord (3) est mis en place dans une région d'extrémité du tube d'enveloppe (2) située du côté du récipient,
- **en ce que** le premier élément formant un rebord (3) est aménagé en forme de manchon et en ce que le tube de support (19) est logé à l'intérieur du premier élément formant un rebord (3),
- **en ce que** le tube de support (19) comprend, pour une liaison détachable avec le premier élément formant un rebord (3), une collerette (28) s'avançant radialement vers l'extérieur, qui est enserrée entre le premier élément formant un rebord (3) et un deuxième élément formant un rebord (24), de forme annulaire, qui est relié à des moyens de fixation au premier élément formant un rebord (3), et
- **en ce que**, pour l'isolation thermique entre le tube de support (19) et le premier élément formant un rebord (3), ainsi qu'entre le tube de support (19) et le deuxième élément formant un rebord (24), des éléments isolants (20, 27) annulaires sont disposés des deux côtés de la collerette (28).

2. Sonde de mesure selon la revendication 1,
**caractérisée :**
**en ce que** le tube de support (19) est, avec un outil, détachable du premier élément formant un rebord (3).

3. Sonde de mesure selon la revendication 1 ou 2,
**caractérisée :**
**en ce qu'**un interstice est formé entre le tube de support (19) et le premier élément formant un rebord (3), pour une isolation thermique supplémentaire.

4. Sonde de mesure selon une des revendications 1 à 3,
**caractérisée :**
**en ce que** le deuxième élément formant un rebord (24) est vissé avec le premier élément formant un rebord (3).

5. Sonde de mesure selon une des revendications 1 à 4,
**caractérisée :**
**en ce qu'**au moins un interstice est prévu entre le tube de support (19) et le deuxième élément formant un rebord (24).

6. Sonde de mesure selon une des revendications 1 à 5,
**caractérisée :**
**en ce que** le premier élément formant un rebord (3) est, au moins par endroit, enfoncé dans le tube d'enveloppe (2).

7. Sonde de mesure selon une des revendications 1 à 6,
**caractérisée :**
**en ce que**, dans le tube d'enveloppe (2), pour une isolation thermique supplémentaire, un troisième élément isolant (23) est disposé, qui est en appui contre une surface périphérique intérieure du tube d'enveloppe (2) et qui comprend une ouverture de passage (60) destinée à être traversée par des câbles de liaison au dispositif de mesure (9).

8. Sonde de mesure selon une des revendications 1 à 7,
**caractérisée :**
**en ce que** le tube d'enveloppe (2) présente une paroi de plus faible épaisseur que le tube de support (19).

9. Sonde de mesure selon une des revendications 1 à 8,
**caractérisée :**
**en ce qu'**un manchon isolant (16) est disposé dans le tube de support (19).

10. Sonde de mesure selon une des revendications 1 à 9,
**caractérisée :**
**en ce qu'**au niveau d'une extrémité du tube d'enveloppe (2) située axialement à l'opposé de la région d'extrémité située du côté du récipient, un couvercle (1) en un matériau thermiquement isolant est disposé pour la fermeture du tube d'enveloppe (2), et
**en ce qu'**un support (21) pour le système électronique, en particulier pour une carte, est fixé au couvercle (1).
